# EUROPEAN PATENT APPLICATION

(11) **EP 1 769 676 A1**
(43) Date of publication of application: **04.04.2007**
(21) Application number: 06120461.6
(22) Date of filing: 11.09.2006
(51) Int. Cl.: A01J 25/11, A01J 25/12

(54) **Handling apparatus for handling compacted curd blocks**

(30) Priority: 30.09.2005 US 239287
(71) Applicant: Kalt Maschinenbau AG, 9604 Lütisburg (CH)
(72) Inventor: Winkler, Roman Martin, 9535 Wilen (CH)
(74) Representative: Stocker, Kurt

(57) **Abstract**

A handling apparatus (2) is disclosed for handling compacted cheese curd blocks. The handling apparatus (2) includes a transporting device (12) for transporting said pressing moulds (3) in between the trough (5) and a transfer area (13) and for enabling the pressing moulds (3) with cheese blocks inside to be turned into a transfer position with the open end facing downwards. It further includes a transfer station at the transfer area (13). The transfer station includes a stand with a transfer surface (20) built by two halve surfaces (20a) movable in between a closed position and an open position, a holding area (21) for holding secondary moulds (4) underneath said transfer surface (20), and at least one releasing device (23) for releasing the cheese blocks from the pressing moulds (3) in the transfer area (13) above the transfer surface (20) with the open end facing downwards.

## Description

**FIELD**

The present invention generally relates to a handling apparatus for handling compacted cheese curd blocks.

**BACKGROUND**

EP 350 777 B1 and EP 406 899 B1 describe apparatuses for compressing cheese curd to form blocks of consolidated curd particles. A fluid including curd and whey is filled into several rows of moulds. Each row of moulds includes a cassette with rigidly connected moulds.

During the filling step, the outlet openings of a filling device are moved over the moulds. For the pressing step a press head with mould covers is pressed down and the mould covers are consolidating the curd particles in the mould while the whey is pressed out of the moulds through perforated areas of the mould. The whey is then collected in a trough.

Each cassette with a row of moulds can be lifted by a handling device. The cassettes have projections on both sides, on which hooks of the handling device can hold the cassettes. In a lifted position the cassettes can be turned around an axis which extends through both hooks. The handling device can be moved along the trough in order to handle all the cassettes in the trough.

EP 543 185 B1 describes press heads in the form of mould covers which permit an unimpeded introduction and withdrawal of the mould cover into and out of the mould. The connection between the pressing plunger and the mould cover allows a small movement of the cover aslant to the pressing direction and a tilting movement during the withdrawal of the cover.

EP 1 269 832 B1 proposes a method and an apparatus for removing the compacted cheese curd blocks from the moulds. The cheese curd blocks are detached from the mould by blowing a gas through a perforation of the mould towards the cheese curd blocks. After removal from the moulds the blocks are lying an a holding surface from where they have to be moved to further processing steps. Manual moving of big blocks causes hard labor. Mechanical moving of cheese curd blocks includes the risk of damage since the blocks are still rather flexible and can easily break apart.

US patent 4 705 470 is disclosing a cheese handling apparatus with mould recesses on a turn table and a mould receiving station, a filling station, a compacting station and an unloading station. At the unloading station a pusher is operable to move the mould with the cheese block onto a conveyer. The moulds are not available for a further filling and pressing cycle as long as there are still a cheese blocks in the moulds.

US 5 175 014 describes a method and an apparatus for collating and consolidating blocks of natural cheese into a homogenous mass of cheese in a container, preparatory to maturing of the cheese. Freshly made, unwrapped blocks at a temperature of 30°C are filled in the container. The blocks in the container fuse together and the maturing of the cheese can proceed in the large container.

The container includes a closed wall and a lower end panel which can be lifted by a lifting device. The end panel is positioned at a position which enables new blocks to be dropped over a short distance on to the end panel or on to the top level of the cheese mass on the end panel.

The cheese blocks are pushed by a pusher plate from a conveyor belt into a cage of a carriage. The cage is moved in a position directly above the container. At this position the floor plate of the cage is fully retracted towards one side so that the cheese blocks drop down. During retraction of the floor plate the cheese blocks are held against the movement of the floor plate by a side wall of the cage.

Transferring the cheese blocks from moulds to the conveyor belt is not described. The handling is complex and the flexible cheese blocks have to slide relative to underlying surfaces and are exposed at the same time to forces in different directions. The forces are transferred to the cheese blocks by two different surfaces, which are simultaneously in contact with the cheese blocks. These handling steps can cause damage to the flexible cheese blocks. Fusing cheese blocks in a large container is not acceptable for many cheeses.

**SUMMARY**

In view of the foregoing, an object of at least one embodiment of the invention is to provide a method and/or a handling apparatus which can precisely fill the flexible cheese blocks into single secondary moulds, each holding only one cheese block.

Another object of at least one embodiment of the invention is to provide a handling apparatus with a simple structure which allows an efficient handling of cheese blocks.

Another object of at least one embodiment of the invention is to provide a handling apparatus which can cooperate with a cheese press with moulds, mould covers and a through, wherein each row of moulds is formed by a cassette which can be lifted by the handling apparatus and turned by 180°.

Another object of at least one embodiment of the invention is to provide a handling apparatus which can fill the cheese blocks of a row of moulds, respectively a cassette, during one transfer cycle into single secondary moulds.

Another object of at least one embodiment of the invention is to provide a handling apparatus for handling compacted cheese curd blocks with a low risk of damage caused to the cheese blocks.

At least one embodiment of the present invention provides for a first consolidation step of using secondary moulds in the form of containers. The fresh pressed cheese curd blocks are transferred from the pressing moulds to secondary moulds. In each secondary mould there will be placed one cheese block. After the transfer the pressing moulds can be used directly for the next pressing cycle, during which new cheese curd blocks are formed. An uninterrupted production is possible with only one set of moulds, respectively cassettes.

The secondary moulds are cup shaped containers adapted to the form of a cheese block. These containers have a bottom and walls vertically extending from the bottom. The crosscut shape corresponds to the shape of pressing moulds and is circular or polygonal, preferably rectangular. Openings or perforated areas in the containers can enable the outflow of whey. The secondary moulds have to hold the cheese blocks in the initial shape. They do not have to withstand pressing forces and can be made of plastic.

During the first consolidation step, the secondary moulds can be stacked in order to reduce the space needed for the consolidation step. Transporting and stacking of secondary moulds is very simple. After the time needed for consolidating, the cheese blocks can go through further treatments without the secondary moulds. In a standard cheese production the secondary moulds will be turned by 180° at a salt bath and the cheese blocks slide into this bath.

Transferring the cheese blocks from the pressing moulds to the secondary moulds is rather delicate because of the flexibility and low stability of the fresh cheese blocks. At least one embodiment of the present invention provides an intermediate step of positioning the cheese blocks on a transfer surface. This positioning step is done by turning the pressing moulds, respectively cassettes, into a position with the open end downwards. In the upside down position, the open ends of the moulds are at a short distance above or at the transfer surface. This distance is preferably smaller then the height of the cheese blocks. The blocks are still held back in the moulds because of adhesion and stiction forces.

The secondary moulds are positioned underneath the transfer surface at positions which are aligned to the positions of the corresponding pressing moulds. The walls of the pressing moulds and the secondary moulds are in each others extension. The secondary moulds are standing on a holding area, which preferably can be moved up and down. In the high end position of the holding area the open upper end of the secondary moulds are in contact or close to the lower side of the transfer surface and therefore supporting the transfer surface. This prevents the transfer surface from bending under the weight of the cheese blocks.

The cheese blocks are released from the holding position in the pressing moulds by a releasing step. For releasing the blocks, at least one releasing device preferably in the form of at least one gas inserting device, is brought into contact with the moulds. The moulds are adapted to let the gas in and push the cheese blocks out by destroying the adhesion and stiction which did hold the blocks in the moulds. By releasing one block after the other, the maximum force on the transfer surface is reduced or even minimized.

The cheese blocks lying on the transfer surface are still extending into the pressing mould, which guarantees a precise position exactly above the secondary moulds. The transfer surface includes two half surfaces which are in contact to each other along a the center line of the cheese blocks on the transfer surface. At least one actuating device can move the two half surfaces away from each other at a high speed. The adhesion and stiction between the cheese blocks and the pressing moulds will no longer exist, and the blocks can get out of the pressing molds by gravity. The falling movement starts at the center line. This permits a centered transfer into the secondary moulds.

Due to the walls of the pressing moulds still guiding the beginning of the falling step and the half surfaces exerting symmetric forces on the cheese blocks, the flexible cheese blocks are precisely centered falling into the secondary moulds without any damage. A direct transfer from the pressing moulds to the secondary moulds without an intermediate stop on the transfer surface can cause problems due to unsymmetrical release from the pressing mould. Without the transfer surface, the flexible cheese blocks could be asymmetrically positioned in the secondary mould. As such, at the wall on one side, there would still be a gap and on the other side the cheese block would be bent and standing out of the secondary mould.

As soon as the cheese blocks are in the secondary moulds, the pressing moulds can be detached from the releasing device(s), turned to the upright position and brought back to their location in the trough. In the meantime, the holding area with the secondary moulds can be moved down so that the secondary moulds are no more in contact to the transfer surface or guiding device(s) of the transfer surface, and therefore free to be transported to a stacking apparatus. New secondary moulds and filled pressing moulds are brought to the transfer surface for the next transfer cycle.

The inventive handling apparatus of at least one embodiment permits a production process without any stops due to transfer problems. The apparatus has a simple structure and can be controlled by simple control devices. Control devices should check that the pressing moulds are in the transfer position, the half surfaces are in the closed position and the secondary moulds are at their transfer position at the time of releasing the cheese blocks. Opening the half surfaces should be allowed only after releasing the cheese blocks.

**BRIEF DESCRIPTION OF THE DRAWINGS**

Fig. 1 is a vertical cut through one end of a cheese press with a handling apparatus for transferring cheese blocks from the pressing moulds to secondary moulds, wherein the handling apparatus is about to move a cassette with filled pressing moulds to a transfer area.

Fig. 2 is a vertical cut through one end of a cheese press with a handling apparatus for transferring cheese blocks from the pressing moulds to secondary moulds, wherein the handling apparatus is about to transfer the cheese blocks from the cassette to the secondary moulds.

Fig. 3 is a vertical cut through the transfer area before or after the transfer of the cheese blocks from the pressing moulds to the secondary moulds.

Fig. 4 is a vertical cut through the transfer area at the time of the transfer of the cheese blocks from the pressing moulds to the secondary moulds.

Fig. 5 is a perspective view of the closed transfer surface with secondary moulds underneath.

Fig. 6 is a perspective view of the open transfer surface with secondary moulds underneath.

Fig. 7 is a perspective view of the stand for the transfer surface and the holding area for holding secondary moulds.

**DETAILED DESCRIPTION OF THE EXAMPLE EMBODIMENTS**

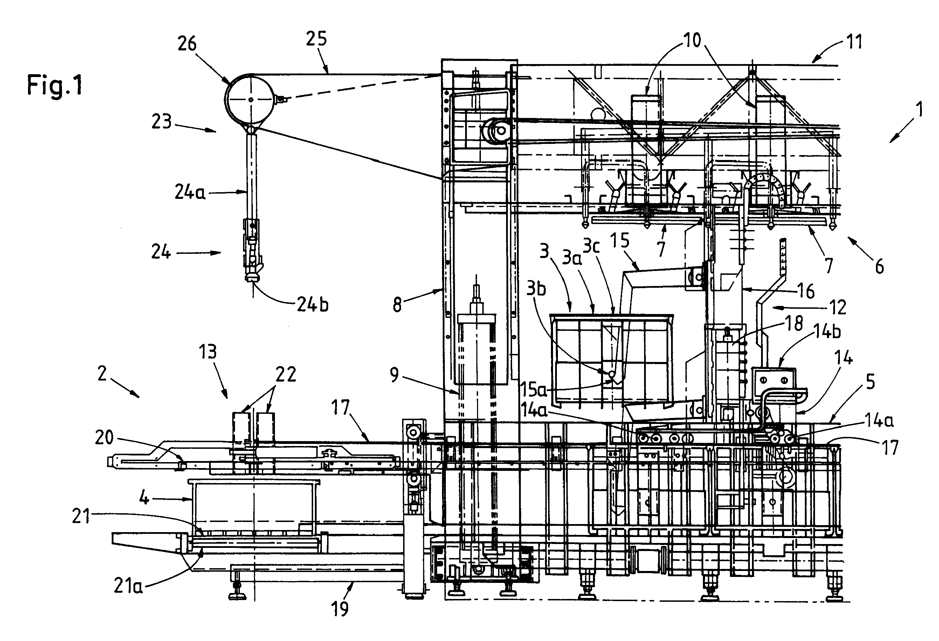

Fig. 1 shows a cheese press 1 with a handling apparatus 2 for handling compacted cheese curd blocks. The cheese blocks have to be transferred from pressing moulds 3 into secondary moulds 4. During and after pressing, the cheese press 1 holds the pressing moulds 3 with the open end upwards at defined positions in a trough 5. Preferably each row of pressing moulds is forming a cassette 3a with rigidly connected pressing moulds 3.

A fluid including curd and whey is filled into several rows of pressing moulds 3. During the filling step, outlet openings of a filling device (not shown) are moved over the pressing moulds 3. For the pressing step, a press head 6 with mould covers 7 is pressed down and the mould covers are consolidating the curd particles in the pressing moulds 3 while the whey is pressed out of the pressing moulds 3 through perforated areas of the pressing moulds 3. The whey is collected by the through 5.

The press head 6 can be moved down and up on vertical posts 8 by driving elements, preferably first pneumatic cylinders 9 with pistons. When the press head 6 is in its low position then the mould covers 7 are pressed by their driving elements, preferably second pneumatic cylinders 10 with pistons, into the moulds 3. Horizontal beams 11 of the press head 6 have to hold the second pneumatic cylinders 10. Due to the high total pressing force of all second pneumatic cylinders 10, the beams 11 have to be very stable.

Each cassette 3a with a row of moulds 3 can be lifted by at least one transporting device 12 for transporting said pressing moulds 3 in between the trough 5 and a transfer area 13. During the filling step and during the pressing step, the transporting device 12 has to be moved away from the trough 5, preferably to the transfer area 13.

The transporting device 12 of the shown embodiment includes a carriage 14, holding arms 15 and a lifting device 16. The carriage 14 is guided by wheels 14a on rails 17 on both long sides of the trough 5. At least one driving device for moving the carriage 14 are controlled by at least one control device for exactly positioning the holding arms 15. In the embodiment shown there is a step motor 14b which guarantees an exact horizontal positioning of the carriage 14. The lifting device 16 includes a driving element, preferably in the form of at least one third pneumatic cylinder 18 with piston.

After a pressing step, the transporting device 12 goes to a pressing mould 3, respectively to a cassette 3a, and gets with gripping ends 15a of the holding arms 15 in gripping contact with holding bolts 3b of the pressing mould 3 or cassette 3a. During a first transporting step, the lifting device 16 lifts the cassette 3a out of the trough 5 over the top level of the other cassettes 3a. In a second transporting step, the carriage 14 moves the cassette 3a to the transfer area 13. There, the cassette 3a is turned by 180° around an axis through the holding bolts 3b. In this turned transfer position, the open ends of the pressing moulds 3 are facing downwards. The turning of the cassette 3a can be done by hand or by a driving element. After transferring the cheese blocks to the secondary moulds 4, the cassettes 3a are turned back in the upright position and transported back to the trough 5.

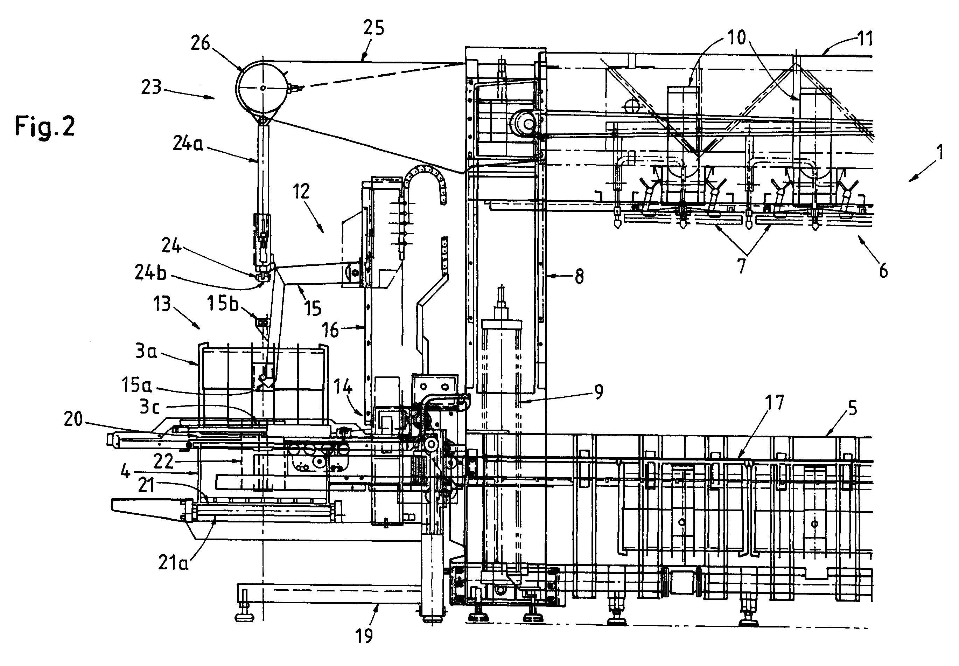

Fig. 2 shows a situation with the cassette 3a upside down at the transfer area 13. The holding arms 15 include beside the gripping ends 15a holding elements 15b for holding and releasing corresponding catch elements 3c of the cassette 3a. In the up-right position of the cassette 3a, the catch elements 3c are held by the holding elements 15b above the holding bolts 3b. In the upside down position of the cassette 3a, the catch elements 3c are below the bolts 3b.

A transfer station at the transfer area 13 includes a stand 19 with a transfer surface 20 including two half surfaces 20a movable in between a closed position and an open position. The stand is also including a holding area 21 for holding secondary moulds 4 underneath the transfer surface 20. The holding area 21 with the secondary moulds 4 can be lifted up to a position where the open upper end of the secondary moulds 4 are in contact to the transfer surface 20. According to the shown embodiment, the holding area 21 is lifted further up so that the secondary moulds 4 push the transfer surface 20 up to the open end of the pressing moulds 3. The vertical movement of the transfer surface is guided by vertical guiding elements 22.

In the high end position of the holding area 21, the open upper ends of the secondary moulds 4 are in contact to the lower side of the transfer surface 20 and therefore supporting the transfer surface 20, which prevents the transfer surface 20 from bending under the weight of the cheese blocks.

The walls of the pressing moulds 3 and the secondary moulds 4 are aligned to each other. This alignment is controlled by stops on the holding area 21. In the shown embodiment, the holding area 21 is a roller conveyor 21a. The secondary moulds are fed to their transfer positions on the roller conveyor 21a, fixed by at least two stops, each on one side of the set of secondary moulds, and after the transfer fed with the cheese blocks to the next processing step. At the time of feeding, at least one stop is withdrawn.

Above the transfer area 13 there is at least one releasing device 23 for releasing the cheese blocks from said pressing moulds 3. The releasing device could include a plunger, for example. In the shown embodiment, the releasing device 23 includes at least one gas inserting device 24 to be brought in contact with the pressing moulds 3, wherein the pressing moulds 3 are adapted to let the gas into the pressing moulds 3 for destroying the adhesion and stiction which are holding the cheese blocks in the pressing moulds 3. The gas inserting device 24 is mechanically fixed by a spacer element 25 to the vertical post 8 and connected to an air pressure tank 26. Tank 26 accumulates a sufficient amount of air under pressure which is needed for blowing out the cheese blocks.

For enabling an automatic releasing step, the gas inserting device 24 includes at least one preferably two connecting cylinder(s) 24a with piston(s), which press the gas outlets 24b into gas inlets at the pressing moulds. The example embodiment has cassettes 3a with three moulds 3 in a row. Correspondingly, there are three gas outlets 24b fitted to the gas inlets of the three moulds. Blowing the cheese blocks out of the pressing moulds 3 can be done at the same time or one after the other. A cassette 3a could as well comprise four or five pressing moulds 3. In the case of big pressing moulds a cassette 3a could comprise only two moulds. The number of gas outlets corresponds to the number of pressing moulds.

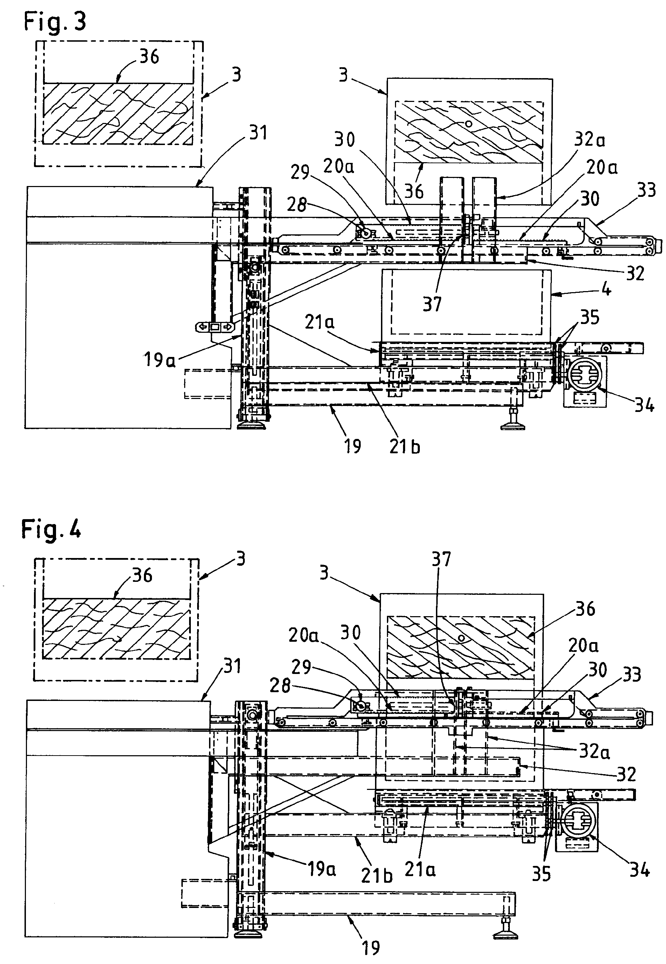

Fig. 3 und 4 are showing the transfer station in more detail. Above the trough 5, the pressing moulds 3 with the cheese blocks 36 are in the upright position. In the transfer area the pressing moulds 3 are turned and the open end is facing downwards. The cheese blocks 36 are held by adhesion and stiction. Aligned to the pressing moulds 3, there are secondary moulds 4 positioned on the roller conveyor 21a. The stand 19 includes vertical guiding elements 19a for guiding the vertical movement of L-shaped support beams 21b. The support beams 21b are holding the roller conveyor 21a.

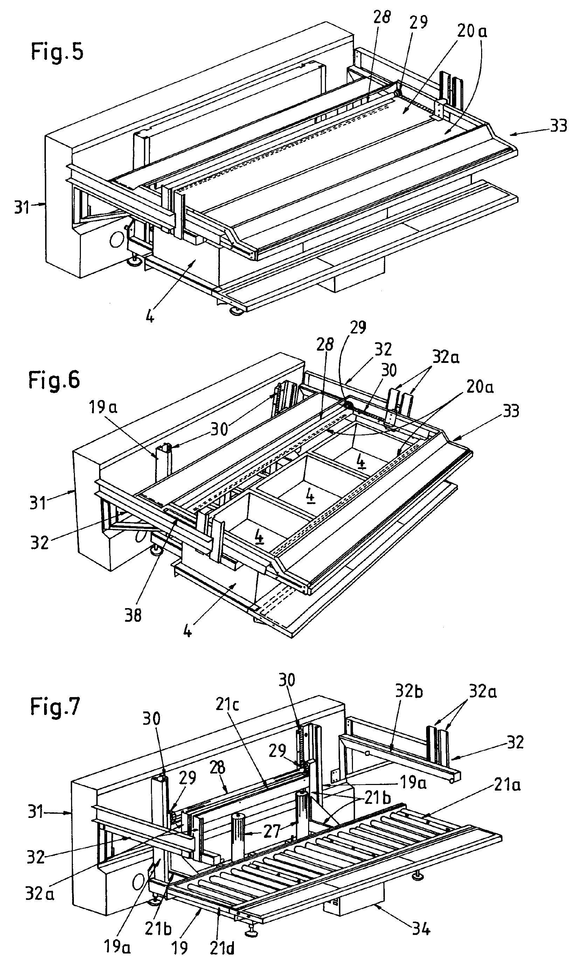

Fig. 7 shows the guiding elements 19a and the support beams 21b guided therein with vertically extending short parts. The vertically extending short parts of the L-shaped support beams 21b are interconnected by a connecting beam 21c, on which driving elements in the form of fourth pneumatic cylinders 27 with pistons are acting for lifting the support beams 21b and the roller conveyor 21a. A rod 28 with toothed wheels 29 on both end parts is extending between two pivot bearings in the support beams 21a. The toothed wheels are both running on toothed racks 30. This arrangement keeps the support beams 21b in absolutely parallel movement and the roller conveyor 21a leveled.

The stand 19 includes a stand casing 31 connected to the guiding elements 19a and to support arms 32 for supporting a transfer surface casing 33 (see Fig. 3). The transfer surface casing 33 is movable up and down and guided by vertical profiles 32a fixed to the support arms 32. At the low position the transfer surface casing 33 is lying on vertical stops 32b of the support arms 32. The roller conveyor 21a has a motor 34 for driving the rollers of the roller conveyor 21a.

Fig. 3 shows the roller conveyor 21a in the low position, where the secondary moulds 4 can be transported to the transfer position by the roller conveyor 21a. Each roll of the roller conveyor 21a includes two gearwheels 35. Chains on the gearwheels 35 are coupling pairs of rolls and a gearwheel 35 of the motor 34. The secondary moulds 4 are held on the transfer position by stops and the motor 34 is stopped. Fig. 7 shows a permanent stop 21d on one side of the roller conveyor 21a. On the other side the stop is moved up after conveying the secondary moulds 4 to the transfer positions and down after transferring the cheese blocks 36. The secondary moulds are fed to and away from the transfer station from the same side.

The support beams 21b are moved upwards with the roller conveyor 21a and the secondary moulds 4. On the way up, the secondary moulds 4 get in contact with the lower side of the halve surfaces 20a. With a further movement upwards the half surfaces 20a with the transfer surface casing 33 are moved upwards to the position shown in fig. 4. The next step will be releasing at least one cheese block 36 so that it falls on the two half surfaces 20a.

In order to transfer the at least one cheese block 36 from the two half surfaces 20a to the secondary moulds, there is a guiding and driving arrangement enabling a fast movement of the two half surfaces 20a away from each other. The guiding and driving arrangement is located within the transfer surface casing 33, which is protecting the moving parts from being touched by stuff. Each half surface 20a is on both sides connected to a toothed rack 30. One extends on top and one below a coupling gear 37. This arrangement couples the movement of both half surfaces 20a. In order to keep them running parallel, there is a rod 28 with toothed wheels 29 running in the toothed racks 30 on both sides of one half surface 21a (fig. 6).

The driving elements for the movement of the half surfaces 20a are fifth pneumatic cylinders 38 with pistons. Only one half surface 20a has to be directly driven by the fifth cylinders 38. One of these fifth cylinders 38 can be seen in fig. 6.

The half surfaces 20a are preferably made of or coated by a material with a low friction coefficient, for example by Teflon. This low friction coefficient reduces the forces acting on the cheese blocks 36 and therefore the risk for damage caused to the cheese blocks 36 during the transfer to the secondary moulds 4.

Fig. 5 shows the transfer station with closed half surfaces 20a with a common contact line which lies in a central area of the open end of a pressing mould 3 and fig. 6 with open half surfaces 20a. In the open position a transfer opening extends in between the half surfaces 20a over the entire pressing mould 3. In the shown embodiment there are three secondary moulds 4 filled in one transfer cycle. The number of secondary moulds 4 corresponds to the number of pressing moulds of a cassette.

The valves for actuating the pneumatic cylinders of the transfer station can be arranged in the stand casing 31. A supply line extends from an air pressure source to a manifold with the valves in the stand casing 31. A control device controlling the transfer steps includes an input device. The input device can be hanging from the spacer element 25, where it is close to stuff controlling the transfer. The actions of the valves and the motor 34 are controlled by the control device.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### Unerkannter Text

## Claims

1. A handling apparatus (2) for handling compacted cheese curd blocks, wherein said cheese blocks have to be transferred into secondary moulds (4) from an initial position in pressing moulds (3) of a cheese press (1) which, during and after pressing, holds the pressing moulds (3) with the open end upwards in a trough (5), said handling apparatus (2) being **characterized by** transporting means (12) for transporting said pressing moulds (3) in between the trough (5) and a transfer area (13) and for enabling the pressing moulds (3) with cheese blocks inside to be turned into a transfer position with the open end facing downwards; and a transfer station at the transfer area (13) including: a stand (19) with a transfer surface (20) built by two half surfaces (20a) movable in between a closed position and an open position, a holding area (21) for holding secondary moulds (4) underneath said transfer surface (20), and releasing means (23) for releasing the cheese blocks from said pressing moulds (3) in the transfer area (13) above the transfer surface (20) with the open end facing downwards.

2. A handling apparatus (2) as claimed in claim 1, **characterized by** said half surfaces (20a) including
in the closed position a common contact line which lies in a central area of the open end of a pressing mould (3) in the transfer position, and in the open position a transfer opening, which extends in between the half surfaces (20a) over the entire pressing mould (3).

3. A handling apparatus (2) as claimed in claim 2, **characterized by** first guiding and actuating means for horizontally moving said half surfaces (21a).

4. A handling apparatus (2) as claimed in claim 1, **characterized by** said releasing means (23) for releasing the cheese blocks including gas inserting means (24), to be brought into contact with the moulds, and for letting the gas into the pressing moulds (3) for destroying the adhesion and stiction which hold the cheese blocks in the pressing moulds (3).

5. A handling apparatus (2) as claimed in claim 1, **characterized by** said stand with the transfer surface (20) including
second guiding and actuating means for vertically positioning said holding area (21) at least in a low and in a high position.

6. A handling apparatus (2) as claimed in claim 5, **characterized by** said stand with the transfer surface including
third guiding means for vertically guiding a movement of said half surfaces, wherein said half surfaces (21 a) are lifted towards the open end of a pressing mould (3) in the transfer position by secondary moulds (4) pressed against said half surfaces by the holding area (21).

7. A handling apparatus (2) as claimed in claim 1, **characterized by** said holding area (21) including stop means (21 d) for positioning at least one secondary mould (4) at a position correlated to said at least one pressing mould (3) in the transfer position.

8. A handling apparatus (2) as claimed in claim 7, **characterized by** three secondary and three pressing moulds (4, 3) being arranged in parallel.

9. A handling apparatus (2) as claimed in claim 1, **characterized by** said transporting means (12) including
gripper means (15) for gripping at least one pressing mould (3), lifting means (16) for vertically moving said gripper means (15), and fourth guiding means (17) for guiding said lifting means (16) together with said gripper means (15) in between said trough (5) and said transfer area (13).

10. A method for handling compacted cheese curd blocks, wherein said cheese blocks have to be transferred into secondary moulds (4) from an initial position in pressing moulds (3) of a cheese press (1) which during and after pressing holds the pressing moulds (3) with the open end upwards in a trough (5), said handling method being **characterized by**
transporting said pressing moulds (3) with pressed cheese blocks from the trough (5) to a transfer area (13), turning the pressing moulds (3) into a transfer position with the open end facing downwards; positioning the cheese blocks on a transfer surface (20) by releasing the cheese blocks from said pressing moulds (3), and letting fall the cheese blocks through a transfer opening in the transfer surface (20) into underlying secondary moulds (4), wherein said transfer opening is built by the movement of two half surfaces (20a) away from each other.
